# EUROPEAN PATENT SPECIFICATION

(11) **EP 1 401 147 B1**
(45) Date of publication and mention of the grant of the patent: **28.11.2007**
(21) Application number: 02256403.3
(22) Date of filing: 16.09.2002
(51) Int. Cl.: H04L 12/26

(54) **Measuring network parameters as experienced by non synthetic network traffic**
Messung von Netzwerkparametern wie sie von nicht künstlichem Netzwerkverkehr wahrgenommen werden
Mésure de paramètres de réseau comme perçu par du traffic non synthétique

(43) Date of publication of application: 24.03.2004
(73) Proprietor: Agilent Technologies, Inc., Santa Clara, CA 95051 (US)
(72) Inventor: Garcia, Francisco, Dunfermline, Fife KY12 8ED (GB); Gardner, Robert, Glasgow G42 8RW (GB); Sventek, Joseph, Edinburgh EH12 5BD (GB)
(74) Representative: Kurz, Peter

(56) References cited:
- EP-A- 1 130 931
- WO-A1-00/76249
- US-A- 5 535 193
- ONOE Y ET AL: "Evaluation of media scaling applied multicast protocol" REAL-TIME COMPUTING SYSTEMS AND APPLICATIONS, 1997. PROCEEDINGS., FOURTH INTERNATIONAL WORKSHOP ON TAIPEI, TAIWAN 27-29 OCT. 1997, LOS ALAMITOS, CA, USA,IEEE COMPUT. SOC, US, 27 October 1997 (1997-10-27), pages 26-33, XP010251843 ISBN: 0-8186-8073-3
- JAE-HOON JEONG ET AL: 'One-way Delay Measurement using IPv6 Source Routing', [Online] February 2002, pages 1 - 9 Retrieved from the Internet: <URL:draft-jeong-1way-delay-ipv6-source-rou ting-00.txt>
- ZSEBY T.; ZANDER S.; CARLE G.: 'EVALUATION OF BUILDING BLOCKS FOR PASSIVE ONE-WAY-DELAY MEASUREMENTS' CONFERENCE PROCEEDINGS ARTICLE:, [Online] April 2001, PAM. PASSIVE AND ACTIVE MEASUREMENT WORKSHOP, pages 1 - 11, XP000086384 Retrieved from the Internet: <URL:http://net.informatik.uni-tuebingen.de /members/carle/publications/papers/ZsZC01_p am2001.pdf>
- DEERING S.; XEROX PARC HINDEN; IPSILON NETWORKS: 'Internet Protocol, Version 6 (IPv6) Specification; rfc1883.txt' IETF STANDARD December 1995, INTERNET ENGINEERING TASK FORCE, IETF, CH, pages 1 - 37, XP015007667
- KENT BBN CORP R ATKINSON OHOME NETWORK S: 'IP Authentication Header; rfc2402.txt' IETF STANDARD November 1998, INTERNET ENGINEERING TASK FORCE, IETF, CH, pages 1 - 22, XP015008186

## Description

### Technical Field

This invention relates to methods and systems for measuring network operational parameters, for example one-way, end-to-end delays, as experienced by network operational traffic (such as data packets in a network using Transmission Control Protocol over Internet Protocol version 6 (TCP/IPv6)).

### Background Art

As the Internet grows and becomes more pervasive in commercial and personal activities, the need to monitor and optimise its operation likewise increases. One example is the measurement of one-way, end-to-end delay. Large values of this delay can affect the performance of some applications; excessive delay variation (jitter) can disrupt real-time applications; transport-layer protocols are less able to sustain high bandwidth if end-to-end delay is too large; the minimum end-to-end delay provides an estimate of the propagation and transmission delay or the likely delay under lightly-loaded path conditions; and values above the minimum provide a good indication of the level of congestion present in the path followed by packets. Round-trip delay is easier to ascertain, but it does not necessarily provide a good means of estimating the one-way delay because upstream and downstream data paths may be significantly different and may exhibit very different performance characteristics even when they are symmetric.

The Internet technology in most widespread use at the beginning of the 21^{st} century is version 4 of the Internet Protocol (IPv4), and most of the measurement and monitoring techniques used with that Internet technology fall into one of two main categories: passive and active techniques.

Passive measurement technologies observe real traffic (data packets) on a link without disruption to the service carried by those packets. Typically these technologies involve the use of state machines which perform some initial level of filtering to select the traffic of interest and then search for particular events using pattern-matching techniques. Upon detection of these events various counters can be updated appropriately. Examples include performance measurement Management Information Bases (MIBs) implemented by Network Element Providers (NEPs) and Remote Monitoring (RMON) probes. Other passive monitoring probe solutions take this one step further by extracting payload data from packets that match the specified pattem(s). Full packet capture is also possible. The collected data are made available to users either on demand (pull model) or upon the occurrence of predefined trigger events (push model).

As with the active measurements described below, a concern is that users may generate immense amounts of measurement data that need to be shipped across the IP links to which the measurements relate, and this may degrade the performance of the service under test owing to competing resource requirements. There are also significant differences in what can be inferred from the measurements obtained by different passive monitoring approaches. RMON- and MIB-based solutions tend to consist primarily of counters that provide a global view of all traffic activity on a network. It is difficult to relate the information obtained to individual services or to infer knowledge that can be utilised to monitor adherence to contractual agreements. Industry or official standards often govern the implementation of the various counters and hence a new type of measurement may take an appreciable time to be ratified and adopted. Techniques which rely on events generated from a particular traffic stream would be better suited to address quality of service (QoS) performance-related issues.

Passive monitoring techniques are particularly useful in gathering 1-point measurements of real user traffic at an observation point on the network. However, passive techniques are less suitable for making 2-point measurements of real user traffic, such as one-way delay, owing to the complexity involved in correlating the packets detected at two distinct observation points. Existing solutions typically involve the observation of identifiable data patterns in packets at appropriately-positioned monitor points. A timestamp and a suitable digest of the data pattern are generated and stored. The one-way, end-to-end delay along a particular path can later be calculated as the time between observations of identical data patterns at monitor points from either end of the path. However, there are a number of disadvantages to this approach. Unlike the case of round-trip delay measurement, it is necessary at least to transfer measurement data from one monitor point to the other for correlation, or even less desirably to transfer measurement data from both monitor points to a third location for correlation. These additional measurement data may require shipping along the same network links as those being monitored, possibly affecting the results obtained. There may also be a sizeable delay between making the measurements and calculating the end-to-end delay values because of scheduling delays at the monitoring points, subsequent propagation and transmission delays associated with transferring measurement data to the point of correlation, and the time taken for the correlation itself. The location and functionality of the correlation process are additional factors which may influence this aspect of measurement performance.

Apart from synchronized clocks for making delay measurements, techniques are required to ensure that both observation points trigger on the same packet for the collection of measurement data. Error handling for lost or mismatched samples is also necessary. Furthermore, passive measurement probes may not be able to keep pace as traffic volumes and data rates increase.

Active techniques are based on the injection into the network of synthetic traffic created specifically for measurement purposes. This synthetic traffic has known characteristics designed to test particular attributes of a service. This type of measurement technology is often employed to make 2-point measurements, particularly in relation to response time, packet loss, bandwidth and service availability. Active techniques are equally suitable for in-service or out-of-service testing. A number of global projects use such techniques and in particular some measurements based on the use of synthetic traffic are being standardized under the IP Performance Metrics Working Group of the Internet Engineering Task Force (IETF). US 5,535,193 discloses an example of a passive measurement apparatus.

For one-way delay, injected packets must either be time-stamped before departure or else a record of the time and packet identity obtained and stored. The injected packets (either all of them or a sample) are identified at the far end and removed from the stream. Another time-stamp is obtained and used with the despatch time-stamp to derive the required delay measurement.

The major disadvantage of active measurement techniques is that they measure the packet forwarding and routing behaviour experienced by the synthetic traffic but not (necessarily) by the real user traffic. The resulting measurements are then used to make assumptions about and predict the experience of real user traffic. To ensure good results it is therefore very important to ensure that the synthetic traffic is appropriately formed and has similar transmission characteristics to the real user data, so that it receives the same treatment and/or follows the same delivery path. Nonetheless, reliance is placed on the accuracy of the active measurements to perform value-added judgments about the service under test. IETF document entitled "One-way Delay Measurement using IPv6 Source Routing" (draft jeong-1way-delay-ipv6-source-routing-00.txt, February 2002) discloses an example of an active measurement technique.

An expanded version of Internet technology, version 6 (IPv6), has been defined and is now being implemented in operational systems. IPv6 provides a variety of enhancements as compared to IPv4:
- 128-bit IP addresses;
- scalable and hierarchical addressing designed for "aggregation";
- better formed packets, with provision for inclusion of 'extension' headers, that simplify processing, eliminate redundancies and provide enhanced functionality;
- Quality of Service / Class of Service support;
- inherent security in the protocol;
- "Plug & Play" auto-configuration of hosts;
- mobility support.
These enhancements are designed to improve or extend the basic functionality of the Internet in communicating data in an efficient, reliable and robust manner. However, the inventors hereof have identified additional opportunities for using one or more of these enhancements to facilitate improved monitoring and measurement of the operation of Internet equipment using IPv6.

The document "Evaluation of Building Blocks for Passive One-way-delay Measurements" by Zseby et al, XP 863.848 discloses building blocks for passive one-way delay measurement using an in-packet transport method, also known as semi-active transport method, as bypassing packets are used to transport eg measurement related data between a measurement point and a collecting point where this data is then evaluated.

### Disclosure of Invention

According to one aspect of this invention there is provided a method of measuring a network operational parameter as experienced by non synthetic network traffic, comprising the steps of:
selecting a packet traversing a first monitoring point in a network in accordance with capability in a data structure definition of the packet for having additional information incorporated in the packet;
incorporating predetermined information for measuring at least one network operational parameter in said selected packet in accordance with its data structure definition;
forwarding said packet towards its destination in accordance with addressing information in the packet;
selecting said packet traversing a second monitoring point in the network in accordance with presence of said predetermined information, and observing said predetermined information; and
implementing a measurement of said network operational parameter in accordance with the observed information.

The invention recognises and develops an opportunity provided by IPv6 packet extension headers to perform 'inline measurements'. The term 'inline' as used herein indicates that measurement triggers which invoke measurement activity, and/or the measurement data themselves, are incorporated into real user packets, so that the measurement operations can be performed in the course of the normal processing of the packets or by specialized software or specialized hardware modules located at appropriate points in the network. This provides a high level of probability that the packets used to perform measurements experience the same treatment and delay as the majority of user packets. The required functionality can easily be implemented by use of IPv6 extension headers, allowing more accurate, flexible and less intrusive measurements to be carried out. Hence inline techniques can be exploited in the development of innovative, more accurate and flexible measurement, management, accounting and billing operational support systems.

According to another aspect of this invention there is provided a system for non synthetic measuring a network operational parameter as experienced by network traffic, comprising:
a selector for selecting a packet traversing a first monitoring point in a network in accordance with capability in a data structure definition of the packet for having additional information incorporated in the packet;
a packet modifier for incorporating predetermined information for measuring at least one network operational parameter in said selected packet in accordance with its data structure definition;
a packet forwarder for forwarding said packet towards its destination in accordance with addressing information in the packet;
a selector for selecting said packet traversing a second monitoring point in the network in accordance with presence of said predetermined information, and observing said predetermined information; and
a parameter measurer for implementing a measurement of said network operational parameter in accordance with the observed information.

### Brief Description of Drawings

A method and system in accordance with this invention, for performing inline measurement of network operational parameters such as one-way end-to-end delay, will now be described, by way of example, with reference to the accompanying drawings, in which:
- Figure 1: shows a notional fragment of the Internet;
- Figure 2: shows the generic format of an IPv6 packet header;
- Figure 3: shows the generic format of an IPv6 destination options extension header;
- Figure 4: shows the generic format of a type-length-value (TLV) tuple which forms part of a destination options extension header;
- Figure 5: shows the generic format of an IPv6 routing extension header;
- Figure 6: illustrates how IPv6 extension headers may be embedded within IPv6 packets;
- Figure 7: shows the format of one example of a destination options extension header configured to facilitate a measurement in accordance with this invention;
- Figure 8: shows an example of an IPv6 packet;
- Figure 9: shows the example IPv6 packet of Figure 8 modified in accordance with this invention by inclusion of an extension header to facilitate measurement of one-way delay;
- Figure 10: is a block diagram indicating possible points for software implementation of the invention in a network element; and
- Figure 11: outlines procedural steps involved in one implementation of the invention.

### Best Mode for Carrying Out the Invention, & Industrial Applicability

For convenience the invention will be described with reference to a network implementing IPv6, in which data are partitioned for transmission into packets. However, it should be understood that the invention is equally applicable in the context of other network technologies which provide functionality analogous to IPv6 extension headers. Accordingly the term packet as used herein is to be understood as embracing data partitions which are referred to by different terminology in such other network technologies, such as cells or frames.

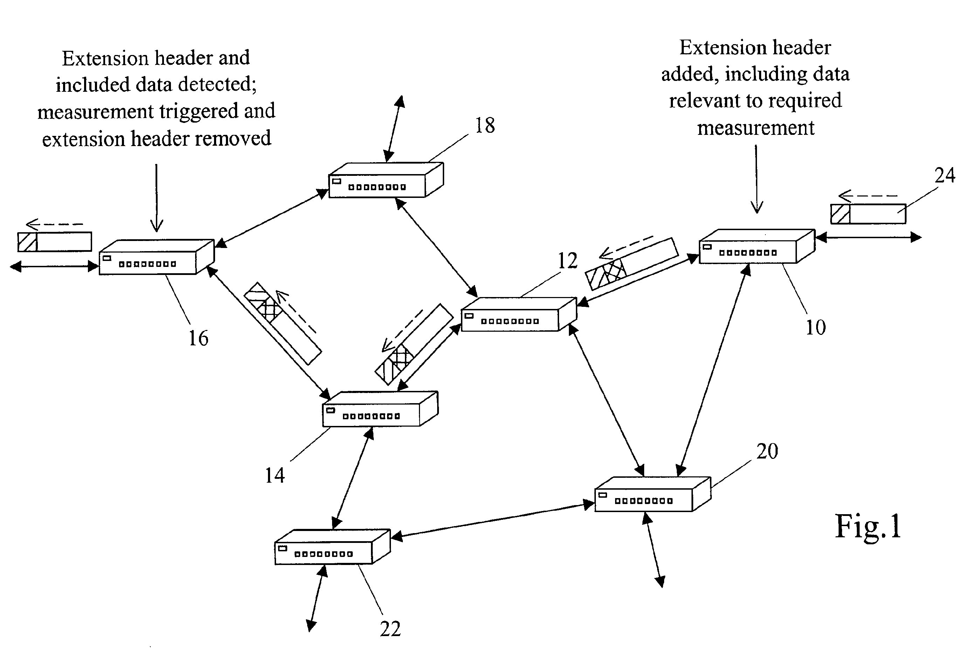

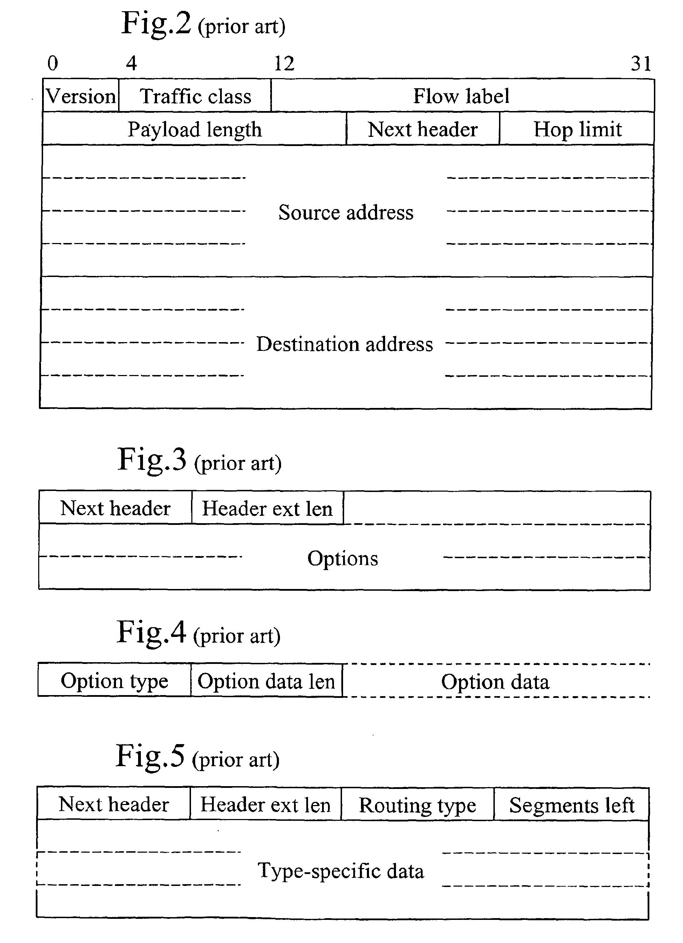

Referring to Figure 1, a notional fragment of the Internet is shown comprising routers 10 to 22 interconnected by links. Packets 24 arriving at the router 10 for example are directed on towards their destination identified in headers forming part of the packets, via the routers 12, 14 and 16 in accordance with routing tables constructed by the routers from information which they exchange among themselves. The format of a packet header as specified for IPv6 in Request for Comments (RFC) 2460 of the Internet Society is shown in Figure 2.

Referring to Figure 2, the packet header is conventionally shown as a sequence of rows, each row representing thirty-two successive binary digit values (four octets). Groupings of adjacent bits to form functional entities are indicated by rectangles. The IPv6 header contains eight such groups:
- Version 4-bit Internet Protocol version number (= 6).
- Traffic Class 8-bit traffic class field.
- Flow Label 20-bit flow label.
- Payload Length 16-bit unsigned integer. Length of the IPv6 payload (i.e. the rest of the packet, including any extension headers, following the IPv6 header) in octets.
- Next Header 8-bit selector. Identifies the type of header immediately following the IPv6 header, using protocol numbers specified (currently) by the Internet Assigned Numbers Authority (IANA) at http://www.iana.org/assignments/protocol-numbers.
- Hop Limit 8-bit unsigned integer. Decremented by 1 by each node that forwards the packet. The packet is discarded if Hop Limit is decremented to zero.
- Source Address 128-bit address of the originator of the packet, formatted as specified in RFC 2373.
- Destination Address 128-bit address of the intended recipient of the packet (possibly not the ultimate recipient, if a Routing header is present).

In IPv6 optional internet-layer information may be encoded in separate headers that may be placed between the IPv6 header shown in Figure 2 and the upper-layer (e.g. TCP) header in a packet. There are various such extension headers, each identified by a distinct Next Header value. Figure 3 shows the format of one such extension header, the Destination Options header. This header is used to carry optional information that need be examined only by a packet's destination node(s). The Destination Options header is identified by a Next Header value of 60 in the immediately preceding header, and contains the following fields:
- Next Header 8-bit selector. Identifies the type of header immediately following the Destination Options header, in the same manner as the Next Header field of the IPv6 header described above.
- Hdr Ext Len 8-bit unsigned integer. Length of the Destination Options header in 8-octet (64-bit) units, not including the first 8 octets.
- Options Variable-length field, of length such that the complete Destination Options header is an integer multiple of 8 octets long. Contains one or more type-length-value (TLV) encoded options, as described below.

The TLV-encoded options have the following format, as illustrated in Figure 4:
- Option Type 8-bit identifier of the type of option (see below).
- Opt Data Len 8-bit unsigned integer. Length of the Option Data field of this option, in octets.
- Option Data Variable-length field. Option-Type-specific data.
The highest-order two bits of the option type identifier specify action that must be taken if the processing IPv6 node does not recognize the Option Type:
00 - skip over this option and continue processing the header;
01 - discard the packet;
10 - discard the packet and, regardless of whether or not the packet's Destination Address was a multicast address, send an Internet Control Message Protocol (ICMP) Parameter Problem, Code 2, message to the packet's Source Address, pointing to the unrecognised Option Type;
11 - discard the packet and, only if the packet's Destination Address was not a multicast address, send an ICMP Parameter Problem, Code 2, message to the packet's Source Address, pointing to the unrecognised Option Type.
The third-highest-order bit of the Option Type specifies whether or not the Option Data of that option can change en-route to the packet's final destination, so that computation or verification of authentication values can be performed without being affected by such changes. The significance of this bit is as follows:
0 - Option Data do not change en-route;
1 - Option Data may change en-route.

The format of another kind of extension header, the Routing header, is shown in Figure 5. This header is used by an IPv6 source to list one or more intermediate nodes to be "visited" on the way to a packet's destination. The Routing header is identified by a Next Header value of 43 in the immediately preceding header; and has the following format:
- Next Header 8-bit selector. Identifies the type of header immediately following the Routing header, in the same manner as the Next Header field of the IPv6 header described above.
- Hdr Ext Len 8-bit unsigned integer. Length of the Routing header in 8-octet units, not including the first 8 octets.
- Routing Type 8-bit identifier of a particular Routing header variant.
- Segments Left 8-bit unsigned integer. Number of route segments remaining, i.e. number of explicitly listed intermediate nodes still to be visited before reaching the final destination.
- Type-specific data Variable-length field, of format determined by the Routing Type, and of length such that the complete Routing header is an integer multiple of 8 octets long.

All extension headers must be formatted so that their overall length is an integer multiple of eight octets, and fields of width *n* octets (*n* = 1, 2, 4 or 8) within a header should be placed at an integer multiple of *n* octets from the start of the header. To assist this two special TLV encoded options are defined: the Pad1 option comprising a single zero-valued octet (with no length or value field), and the PadN option (for inserting *N* octets in total where *N*>1) comprising *N*-2 zero-valued octets plus a type field containing the value 1 and a length field containing the value *N*-2.

With the exception of a special Hop-by-Hop options header (not discussed here but described in RFC 2460), each of the different IPv6 extension headers is required by the RFC to be examined only at the node (or group of nodes in the case of multicast services) having the destination address contained in the main IPv6 header. In other words, packet extension headers are not examined or processed by intermediate nodes that are simply implementing routing according to IPv6 along the packet forwarding route.

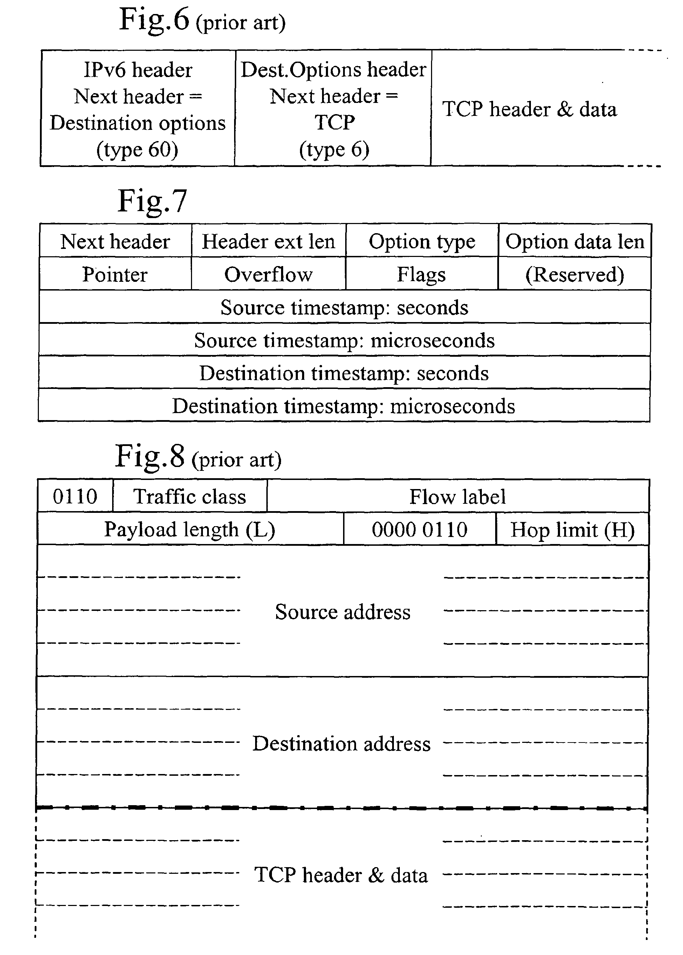

Each extension header points to the start of the next by means of the Next Header field, forming a kind of one-way chain. Each header in the chain is processed strictly in sequence, and the contents and semantics of each extension header determine whether the receiving node will proceed to the next header or not. Figure 6 illustrates an example of such a chain of headers, for the case where a Destination Options header has been inserted between the IPv6 header and the packet's payload. In this case the Next Header field of the IPv6 header contains the value 60, and the corresponding field of the Destination Options header contains the value 6, indicating that this extension header is followed by a TCP upper-protocol-layer header and data.

The present invention makes use of extension headers, for example the Destination Options and Routing headers, to facilitate 'inline' measurement of operational parameters such as one-way end-to-end delay, two-way (round-trip) delay, accumulated delay (using time stamps added as a packet traverses various segments of a link), and two-point loss (loss of packets in transit between two points). The invention may also be used for monitoring router operation, such as tracing progress of packets through the network by means of tags in extension headers to identify packets to be traced. This measurement and monitoring is accomplished by adding extension headers, formatted as described in the example below, to packets which are traversing the network as part of its normal operation.

The Destination Options header for example can conveniently be used for these purposes without disturbing the normal operation of routers which process the packets to which this header has been added, by setting the highest-order two bits of the option type identifier in the extension header to 00. If desired the Destination Options header can be removed before delivery of the packet to its intended destination of the packet (e.g. client/server). But even if this is not done (either intentionally or because the header is erroneously not removed) the destination node will simply skip past this option upon receipt, in accordance with the 00 option type identifier.

In principle a specific extension header could be defined for measurement purposes, as RFC 2460 permits potential definition of additional extension header types in the future. The invention can be used with such specific extension headers if they are defined. However, this approach would result in the provision of a specific Next Header value uniquely associated with measurement extension headers and identifiable as such anywhere in the network. Accordingly network equipment manufacturers and operators would be able to determine that any packet having a header containing this Next Header value is being used to gather measurement and management data. Equipment could readily be designed to treat such packets in a favoured but atypical manner, potentially defeating the purpose of the measurements. By using the Destination Options extension header (or the Routing header) this risk is minimised, as there is nothing to distinguish the measurement purpose of the header. Furthermore, only those nodes to which Destination Options or Routing headers are applicable will process the headers in the course of normal network operation, reducing the risk of disturbance to that operation.

However, it is of course necessary for nodes which are involved in the measurement process (e.g. the routers 10 and 16 in the example described below) to detect and process the relevant extension headers, even though they would ignore them in normal network operation. This may be accomplished, as described below, by augmenting the normal operating firmware in these nodes with modules which extend the packet processing functionality of the nodes as required.

For the measurement of delay a Destination Options extension header is conveniently used to carry information required for the measurement. Figure 7 shows the format of such a header for use in measuring one-way delay, including appropriate option data fields as follows:
- Pointer 8-bit unsigned integer. Used to indicate the location of the next unused slot in the option data, i.e. for storage of a timestamp.
- Overflow 8-bit unsigned integer. Used to indicate if an attempt is made to store more timestamps than there are slots to accommodate them.
- Flags Octet comprising eight binary flags, for example for indicating the nature of data stored elsewhere in the option data fields.
- Reserved A zero-valued octet included for alignment purposes, i.e. to ensure that the complete extension header is an integer multiple of eight octets in size.
- Source timestamp Two 32-bit unsigned integers. Timestamp indicating time of forwarding of the packet from the interface of the node where the extension header was inserted. The two component integers represent the seconds and microseconds portions respectively of the time elapsed since 0000 hrs on 1^{st} January 1970 Universal Coordinated Time (UTC).
- Destination timestamp Two 32-bit unsigned integers. Timestamp indicating time of receipt of the packet at the interface of the node where the extension header is detected, in the same format as the source timestamp.
The Option Type identifier in the header is set to a value allocated to identify "one-way end-to-end delay measurement".

The example of the invention shown in Figure 1 illustrates the case of delay measurement within a section of a network, such as between ingress and egress points of a packet flow across the boundaries of a section under the control of a single operator. However, the invention is equally applicable to "end-to-end" measurements, such as from a server (e.g. serving a website) to a client (e.g. a wireless-connected personal digital assistant (PDA) running a web browser application).

Referring again to Figure 1, the router 10 is configured to select one or more packets in accordance with an appropriate, predetermined criterion. For example, packets could be selected at random from among those addressed to a specified destination, or emanating from a particular source irrespective of destination. Other possibilities for selection include: all packets transported by a particular upper-layer protocol such as TCP, User Datagram Protocol (UDP), ICMP or Internet Group Management Protocol (IGMP); or all packets of a particular application type such as Session Initiation Protocol (SIP), Real-Time Transport Protocol (RTP) or Hypertext Transfer Protocol (HTTP). Thus identification of packets (e.g. at network ingress points) in a desired flow or stream of packets conforming to the same characteristics, for the insertion of an extension header (with its option fields), can be controlled by arbitrarily complex rules involving for example a combination of any of: source and destination IP addresses and prefixes; transport protocols; source and destination port numbers included in transport protocols like TCP and UDP; traffic class; and flow label. If the network is carrying both IPv4 and IPv6 packets, then the selection is made from among the IPv6 packets.

If repeated measurements need to be made, and a uniform interval were to be used between packets selected for inline measurements, the measured delay could be affected by the operation of other applications using the same path that happen to be communicating on the same periodic basis. To mitigate this possibility the interval between selected packets is preferably chosen from a random distribution, such as a Poisson or truncated Pareto distribution.

Once an appropriate packet has been selected, a Destination Options extension header is added (or modified if the packet contains one already) and a TLV option formatted as shown in Figure 7 is added, with the type field indicative of "one-way end-to-end delay" and a timestamp value. The delay to be measured is the total time during which the packet is traversing the link(s) between departing from the sending node's link interface and arriving at the destination node's link interface (known as "wire time"), so the known or estimated final processing time in the node between obtaining the timestamp value and departure of the packet from the interface should be added to the timestamp before it is inserted into the packet's header. If desired another TLV encoded option can be included to provide an address (e.g. for a network management node) to which the delay measurement result should be forwarded after calculation at the receiving node.

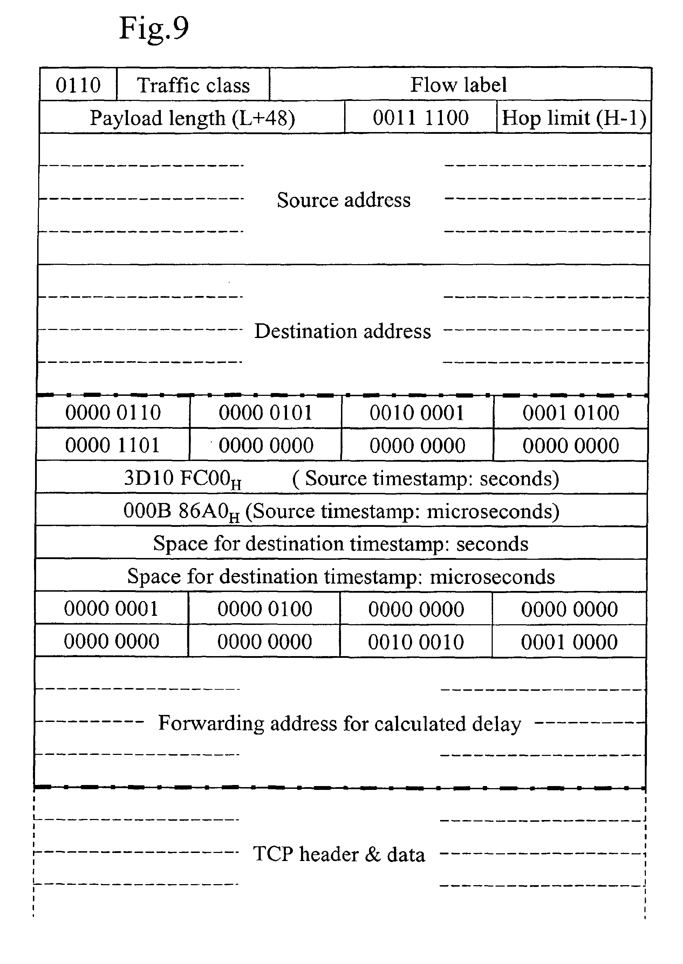

Figure 8 shows an example of an IPv6 packet before insertion of a Destination Options extension header for delay measurement, and Figure 9 shows the same packet after addition of the header (highlighted by dash-dot lines) containing the TLV options for the timestamps and the forwarding address. Comparing the two figures, the IPv6 payload length field in Figure 9 has been increased by 48, indicating the number of octets in the extension header. The next header field in the IPv6 header has been changed to 60 (indicating a Destination Options extension header follows), and the hop limit has been decremented. The next header field of the extension header contains the value 6 (for the following TCP header), previously in the IPv6 header, and the extension header's length is indicated as five 8-octet units beyond the first eight octets. The first TLV option has an option type value of 33 (0010 0001), used in this example to indicate "one-way end-to-end delay" and also indicative that the option may be skipped by any node which is not equipped to process it and that the option data may change (i.e. the destination timestamp). The option length is 20 octets. The pointer value is 13 (0000 1101), indicating that the 13^{th} octet (the start of the destination timestamp) is the next unused slot in the option, and the overflow and flags octets are set to zero. The source timestamp comprises values of 3D10 FC00_{H} seconds (corresponding to a date in June 2002) and 000B 86A0_{H} microseconds (corresponding to a time just after 1800). The next TLV option comprises a total of six octets of padding, followed by the last option, specifying a forwarding address. This option has a type of 34 (0010 0010, used in this example to indicate "forwarding address for delay measurement" and also indicative that the option may be skipped by any node which is not equipped to process it and that the option data may not change. The option length is 16 octets, comprising the 128-bit forwarding address itself.

The node at the other end of the path over which delay is to be measured (in the example in Figure 1 this is the node 16) is configured as described below to process Destination Options headers and in particular is able to interpret the special "one-way end-to-end delay" and "forwarding address for delay measurement" TLV options. On receipt of a packet with one of these headers, the node 16 reads and stores the contents of the header. The packet is then reassembled, possibly without the Destinations Options header if no other option fields are present, and forwarded on to its ultimate destination.

The source timestamp value contained in the Destination Options header is read and subtracted from the current time on the destination node in order to calculate the one-way end-to-end link-transmission time delay. The initial packet processing time between arrival of the packet at the node's interface and obtaining the node's own value of current time should also be accounted for in the calculation. The calculated value is forwarded to the address specified in the Destination Options header either via a TLV-encoded option in a Destination Options header included in a new packet generated for that purpose, or by being added to a user packet headed for the same address, depending on the urgency of the measurement. Alternatively, another TLV option could be used to specify that the delay measurement results be stored in a cache in the node 16 for later despatch or collection.

It is necessary to ensure that the clocks in the source and destination nodes are either synchronized to a desired degree of accuracy or that the time offset between them is stable and known. The required accuracy and precision of the delay measurement, and therefore of the time-stamping process, is a significant factor in the choice of method of clock synchronization. These and related issues are discussed in more detail in RFC 2679.

The IPv6 specification requires that every link must have a maximum transmission unit (MTU) size of 1280 octets or greater to allow IPv6 to operate. The recommended MTU is 1500 octets. If the addition of Destination Options to a selected packet risks violating the MTU restrictions of the link over which the packet will be forwarded by the node 10, the next suitable packet should be selected instead. This is because the delay measurement is time-sensitive and it would therefore be inappropriate to incur the time penalty associated with the lower-layer packet fragmentation and reassembly required to forward the packet over that link. As the packet selection process is desirably randomised, this modification to the process should not have any adverse statistical effect.

As described above, the processes of adding Destination Options headers to packets and detecting and removing them elsewhere to perform delay measurements are undertaken by routers such as 10 and 16. Such routers are effectively dedicated data processors, containing one or more processor units operating under software program control, associated memory for storing the programs and related data, buffer memory for holding packets being processed and input and output interfaces for receiving and transmitting the packets.

At this system level the required functionality for performing delay and other measurements can be implemented, for example, by using dynamically loadable modules to provide additional processing logic for the manipulation of packet extensions in headers and other supporting functions such as the storage, retrieval, correlation and forwarding of measurement-related data. By modularising the set of monitoring and measurement tasks it is possible to dynamically load only those modules that are needed at a particular time and then unload them once they are no longer in use. The loadable modules may be remotely delivered to the nodes, loaded and configured and, whilst in use, effectively become an integral, embedded part of the nodes' operating software.

Minimization of the actively-used processing logic in this way can reduce memory usage, speed up processing time, limit circuit-board space requirements, simplify designs and reduce overall subsystem complexity. In the case of nodes that comprise mobile devices in a wireless local area network (LAN) such as cell phones and handheld personal digital assistants (PDAs), which have limited resources in terms of processing capability and memory, this modular approach is particularly advantageous. The required functionality can be easily provided at network base station nodes to automatically load/unload modules in response to signalling or even the data traffic itself, facilitating automated, reactive strategies for deployment of efficient measuring and monitoring. In particular this obviates the need to track traffic around a network for measurement purposes because the traffic itself can initiate the measurement/monitoring functionality. This could be especially useful in the context of mobile cellular radio access networks, as mobile terminals can roam freely and data may take a plurality of paths through the network during a single session.

This modular approach also lends itself well to a remote, distributed implementation as the modules can be freely inserted and removed around the network as required, providing a potential for dynamically-configurable, localized processing sites and correlation entities. Another significant advantage of the embedded module approach is that it is not necessary physically to connect into the electrical or optical cables comprising the links between routers in order to monitor passing data. The embedded module approach instead makes use of spare programmable logic or processing capability within the routers or other network devices, providing a more integrated, inherently powerful solution. Upgrades involve delivering new modules to nodes (for example over the network itself), which can either be directly loaded on delivery or be temporarily stored on some form of local media (e.g. hard disc storage) for later use.

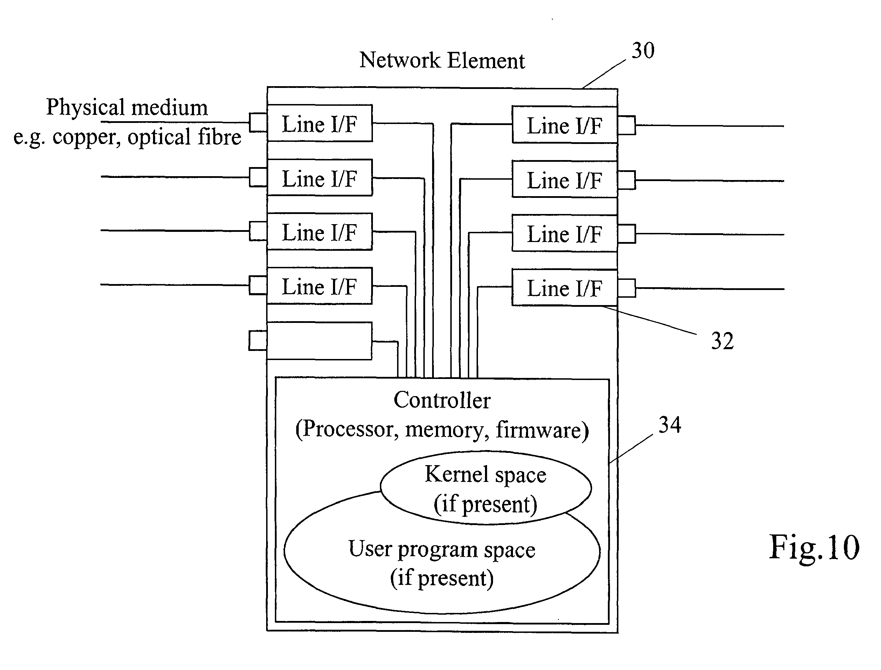

Figure 10 shows an illustrative architecture of a single network element 30 with a number of line interfaces 32 and a controller 34 comprising a processor, memory and program software or firmware. The figure illustrates three different example integration points where, depending on the design of the network element 30, dynamically loadable modules can be accommodated:
- (A) the modules may be loaded onto a line interface 32 to control dynamic reconfiguration of hardware (e.g. field programmable gate arrays - FPGAs), or as software/ firmware to control processing logic in the line interface, or as a hybrid combination of both options;
- (B) the modules may exist as loadable software in the software operating system 'kernel' or equivalent for the controller 34;
- (C) the modules may exist as loadable applications in 'user' space provided by the controller's operating system.

Integration in accordance with option B assumes that the operating system enables addition of modules to the system kernel, e.g. Loadable Kernel Modules (LKMs). These typically provide better processing performance compared to applications executing in user space, and can easily be configured to add, remove and modify extension headers as an integral part of the kernel's implementation of the network protocol stack rather than having to explicitly construct entire packets in an external user-space process.

Option C involves processing IPv6 extension headers in user space rather than as part of the operating system's protocol stack implementation. This may not be as elegant a solution as the use of kernel modules, and may have poorer performance. However it does not require knowledge of operating system kernel programming techniques and therefore may be simpler to implement. In addition it avoids possible problems with operating system security and integrity which may conflict with security policies of an organisation operating the routers or other nodes in question.

The insertion of extension headers into user traffic for the purpose of measurement and monitoring can be dynamically controlled depending on a particular management application requirement. Thus not all user packets need to have extension headers embedded in them. Selection can be based on application and sampling could also be applied.

The techniques described above for performing inline monitoring and measurement provide a number of advantages over existing approaches:
- The router functionality that implements the IPv6 protocol is also used to perform the work in detecting which packets need to be processed, since these are identified via a standard extension header; it is therefore possible to avoid complex filtering techniques to examine every packet arriving at an interface in order to check whether the packet meets predefined criteria for inclusion in the monitoring/measurement operation.
- It is the user traffic itself which carries the measurement and triggering information, so when a packet is observed at each of two monitoring points it is guaranteed that the same packet is involved on both occasions.
- Similarly, correlation of data from path endpoints is not necessary, reducing the complexity of the measurement system, potentially reducing the amount of measurement data that must be transferred across the network, and facilitating speedier availability of the measurement results.
- Any added data is incorporated within real user traffic. Assuming that the marginal increase in the packet header length does not change how the packet is treated on its journey through the network, there is a very high probability that the added data will therefore receive the same treatment and follow the same routing path as the real user traffic.
- The total amount of additional traffic transported across the network for measurement purposes is limited.
- Unlike active measurements consisting of injected packets, two-point inline measurement results will more accurately reflect the behaviour of packets influencing a user's experience of the network's operation, with only a small additional systematic processing delay and marginally larger overall packet length compared to undisturbed packets.
- The characteristics of the IPv6 protocol are used in an advantageous manner to enable dynamic instrumentation for measurement and monitoring of the network's behaviour to be simplified, and so reduce the cost and complexity and the requirement for specialized probes to provide the same functionality.
- Inline measurements using IPv6 extension headers are not in general affected by the higher-layer transport protocol used (e.g. UDP or TCP). Similar measurements can therefore be conducted for any chosen transport protocol or, conversely, despite the given transport protocol.

The 20-bit flow label field in the main IPv6 header (Figure 2) is experimental in nature. To the extent that this field is not actually used for its original intended purpose, and assuming that its use for other purposes does not compromise operation of the network, a combination of destination options, routing header and the flow label field enable selective addition of data to real user traffic which will be detected and processed, where the necessary functionality is implemented, by a node's IPv6 protocol layer. The level and nature of processing can be determined by the options contained in the extension header, and may involve incrementing counters, adding a timestamp annotation, extracting packet data and dumping it into a cache with timestamp annotations and various counts, or triggering capture of a full copy of a packet. Destination options on their own can be used to perform end-to-end inline service measurements (across an IPv6 network). With the addition of a routing header, it is possible to target specific nodes en-route to enable the implementation of more detailed service measurements as the user traffic traverses crucial points of a network cloud. It is also possible to employ some bits in the flow-label field to easily identify and trigger measurement and monitoring behaviour as the user traffic containing the inline data is forwarded via nodes en-route to its destination.

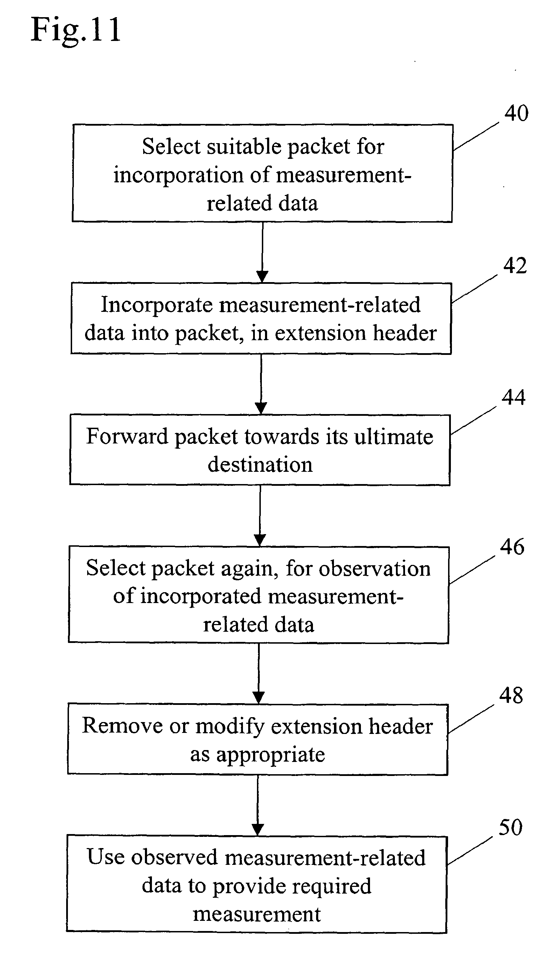

In general terms, the invention involves the following procedural steps, as illustrated in Figure 11, which may be distributed among several different items of equipment (e.g. routers):
(a) a packet is selected at a first "logical" point in the network (40);
(b) data are added to the packet by means of at least one extension header (42);
(c) data in any existing extension header may optionally be modified;
(d) the extension header data in the packet are observed, for example at a second "logical" point in the network (44, 46);
(e) the extension header data may then be removed (48) and the required measurement is obtained (50).
The "logical" points in the network may also be physically-separated points. However, depending on the nature of the measuring or monitoring activity, the two "logical" points may be physically co-located at the same physical point. For example a single observation point may be used for tracing or tracking a TCP connection or any transactional "conversation" (such as signalling protocols for the establishment and maintenance of state) that traverses this observation point. Thus the observation point could insert extension headers into packets flowing in one direction, and receive echoed values in extension headers in packets in the reverse direction, for response-based measurements. In this way connection set-up time for TCP or other connection-oriented or transactional protocols can be estimated. Another possibility would be to measure the time taken to set up an SIP association so that a real-time service like voice-over-IP (VoIP) can be delivered. Another example of co-location of logical measurement points is the measurement of parameters on a ring network.

Although the invention has been described for convenience in the context of a network conforming to the IPv6, it is equally applicable in connection with other networking systems and protocols which enable additional information to be incorporated in a packet during its transit through a network.

## Claims

1. A method of measuring a network operational parameter as experienced by non-synthetic network traffic, comprising the steps of:
selecting (40) a packet (24) traversing a first monitoring point (10) in a network in accordance with capability in a data structure definition of the packet (24) for having additional information incorporated in the packet (24);
incorporating (42) predetermined information for measuring at least one network operational parameter in said selected packet (24) in accordance with its data structure definition;
forwarding (44) said packet (24) towards its destination in accordance with addressing information in the packet (24);
selecting (46) said packet (24) traversing a second monitoring point (16) in the network in accordance with presence of said predetermined information, and observing said predetermined information; and
implementing (50) a measurement of said network operational parameter in accordance with the observed information.

2. The method of claim 1, wherein the first and second monitoring points (10, 16) are situated at the same physical location in the network.

3. The method of claim 1 or claim 2, wherein at least one of the first and second monitoring points (10, 16) is situated at a source or destination end-point of the selected packet (24).

4. The method of claim 3, wherein the packet path to the end-point involves a wireless connection.

5. The method of any one of the preceding claims, wherein the network operational parameter is any of one-way end-to-end delay, round-trip delay, accumulated delay, loss of packets in transit between two points and progress of packets through the network.

6. The method of claim 5, wherein the predetermined information comprises a timestamp of transmission of said packet (24) from said first monitoring point (10).

7. The method of any one of the preceding claims, wherein the network uses Internet Protocol version 6 IPv6 and the predetermined information is incorporated in an IPv6 extension header.

8. The method of claim 7, wherein the IPv6 extension header is a Destination Options extension header.

9. A system for measuring a network operational parameter as experienced by non-synthetic network traffic, comprising:
a selector for selecting (40) a packet (24) traversing a first monitoring point (10) in a network in accordance with capability in a data structure definition of the packet (24) for having additional information incorporated in the packet (24);
a packet modifier for incorporating (42) predetermined information for measuring at least one network operational parameter in said selected packet (24) in accordance with its data structure definition;
a packet forwarder for forwarding (44) said packet (24) towards its destination in accordance with addressing information in the packet (24);
a selector for selecting (46) said packet (24) traversing a second monitoring point (16) in the network in accordance with presence of said predetermined information, and observing said predetermined information; and
a parameter measurer for implementing (50) a measurement of said network operational parameter in accordance with the observed information.

10. The system of claim 9, wherein the network operational parameter is any of one-way end-to-end delay, round-trip delay, accumulated delay, loss of packets in transit between two points and progress of packets through the network.

## Patentansprüche

1. Ein Verfahren zum Messen eines Netzwerkbetriebsparameters, wie derselbe durch nichtsynthetischen Netzwerkverkehr erfahren wird, das die folgenden Schritte aufweist:
Auswählen (40) eines Pakets (24), das einen ersten Überwachungspunkt (10) in einem Netzwerk durchläuft, gemäß einer Fähigkeit in einer Datenstrukturdefinition des Pakets (24) für ein Eingliedernlassen zusätzlicher Informationen in das Paket (24);
Eingliedern (42) vorbestimmter Informationen zum Messen von zumindest einem Netzwerkbetriebsparameter in das ausgewählten Paket (24) gemäß der Datenstrukturdefinition desselben;
Weiterleiten (44) des Pakets (24) gemäß Adressierungsinformationen in dem Paket (24) hin zu dem Bestimmungsort desselben;
Auswählen (46) des Pakets (24), das einen zweiten Überwachungspunkt (16) in dem Netzwerk durchläuft, gemäß einem Vorhandensein der vorbestimmten Informationen, und Beobachten der vorbestimmten Informationen; und
Implementieren (50) einer Messung des Netzwerkbetriebsparameters gemäß den beobachteten Informationen.

2. Das Verfahren gemäß Anspruch 1, bei dem der erste und der zweite Überwachungspunkt (10, 16) an dem gleichen physischen Ort in dem Netzwerk positioniert sind.

3. Das Verfahren gemäß Anspruch 1 oder Anspruch 2, bei dem zumindest einer des ersten und des zweiten Überwachungspunkts (10, 16) an einem Quell- oder Bestimmungsortendpunkt des ausgewählten Pakets (24) positioniert ist.

4. Das Verfahren gemäß Anspruch 3, bei dem der Pfad des Pakets zu dem Endpunkt eine drahtlose Verbindung umfasst.

5. Das Verfahren gemäß einem der vorhergehenden Ansprüche, bei dem der Netzwerkbetriebsparameter ein(e) beliebige(r) einer Einweg-Ende-zu-Ende-Verzögerung, einer Umlaufverzögerung, einer akkumulierten Verzögerung, eines Verlusts von Paketen im Transit zwischen zwei Punkten und eines Vorankommens von Paketen durch das Netzwerk ist.

6. Das Verfahren gemäß Anspruch 5, bei dem die vorbestimmten Informationen einen Zeitstempel einer Übertragung des Pakets (24) von dem ersten Überwachungspunkt (10) aufweisen.

7. Das Verfahren gemäß einem der vorhergehenden Ansprüche, bei dem das Netzwerk das Internet-Protokoll Version 6, IPv6, verwendet und die vorbestimmten Informationen in einen IPv6-Erweiterungskopfblock eingegliedert werden.

8. Das Verfahren gemäß Anspruch 7, bei dem der IPv6-Erweiterungskopfblock ein Bestimmungsortoptionen-Erweiterungskopfblock ist.

9. Ein System zum Messen eines Netzwerkbetriebsparameters, wie derselbe durch nichtsynthetischen Netzwerkverkehr erfahren wird, das folgende Merkmale aufweist:
einen Wähler zum Auswählen (40) eines Pakets (24), das einen ersten Überwachungspunkt (10) in einem Netzwerk durchläuft, gemäß einer Fähigkeit in einer Datenstrukturdefinition des Pakets (24) für ein Eingliedernlassen von zusätzlichen Informationen in das Paket (24);
einen Paketmodifizierer zum Eingliedern (42) vorbestimmter Informationen zum Messen von zumindest einem Netzwerkbetriebsparameter in das ausgewählte Paket (24) gemäß der Datenstrukturdefinition desselben;
eine Paketweiterleitungseinrichtung zum Weiterleiten (44) des Pakets (24) gemäß Adressierungsinformationen in dem Paket (24) hin zu dem Bestimmungsort desselben;
einen Wähler zum Auswählen (46) des Pakets (24), das einen zweiten Überwachungspunkt (16) in dem Netzwerk durchläuft, gemäß einem Vorhandensein der vorbestimmten Informationen, und zum Beobachten der vorbestimmten Informationen; und
eine Parametermesseinrichtung zum Implementieren (50) einer Messung des Netzwerkbetriebsparameters gemäß den beobachteten Informationen.

10. Das System gemäß Anspruch 9, bei dem der Netzwerkbetriebsparameter ein(e) beliebige(r) einer Einweg-Ende-zu-Ende-Verzögerung, einer Umlaufverzögerung, einer akkumulierten Verzögerung, eines Verlusts von Paketen im Transit zwischen zwei Punkten und eines Vorankommens von Paketen durch das Netzwerk ist.

## Revendications

1. Procédé de mesure d'un paramètre opérationnel de réseau, rencontré sur un trafic non synthétique de réseau, comprenant les étapes consistant à:
sélectionner (40) un paquet (24), lorsqu'il passe par un premier point de contrôle (10) dans un réseau, conformément à une capacité, incluse dans une définition de structure du paquet (24), à contenir une information additionnelle incorporée dans le paquet (24) ;
incorporer (42) dans ledit paquet sélectionné (24), conformément à sa définition de structure, une information prédéterminée pour mesurer au moins un paramètre opérationnel de réseau;
transmettre (44) ledit paquet (24) vers sa destination conformément à l'information d'adressage contenue dans le paquet (24);
sélectionner (46) ledit paquet (24), conformément à la présence de ladite information prédéterminée, lorsqu'il passe par un deuxième point de contrôle (16) dans le réseau, et observer ladite information prédéterminée;
exécuter (50) une mesure dudit paramètre opérationnel de réseau conformément à l'information observée.

2. Procédé selon la revendication 1, dans lequel les premier et deuxième points de contrôle (10, 16) sont situés au même emplacement physique dans le réseau.

3. Procédé selon la revendication 1 ou la revendication 2, dans lequel au moins l'un des premier et deuxième points de contrôle (10, 16) est situé à un noeud d'extrémité, de source ou de destination, du paquet sélectionné (24).

4. Procédé selon la revendication 5, dans lequel le trajet du paquet jusqu'au noeud d'extrémité implique une connexion sans fil.

5. Procédé selon l'une quelconque des revendications précédentes, dans lequel le paramètre opérationnel est l'un quelconque des paramètres suivants: retard unidirectionnel de bout en bout, retard aller et retour, retard accumulé, perte de paquet en transit entre deux points, et progression de paquet à travers le réseau.

6. Procédé selon la revendication 5, dans lequel l'information prédéterminée comprend un horodatage de transmission dudit paquet (24) depuis ledit premier point de contrôle (10).

7. Procédé selon l'une quelconque des revendications précédentes, dans lequel le réseau utilise le protocole Internet version 6, IPv6 en abrégé, et l'information prédéterminée est incorporée dans un en-tête d'extension de l'IPv6.

8. Procédé selon la revendication 7, dans lequel l'en-tête d'extension de l'IPv6 est un en-tête d'extension dit Destination Options c'est-à-dire options de destination.

9. Système de mesure d'un paramètre opérationnel de réseau, rencontré sur un trafic non synthétique de réseau, comprenant:
un sélecteur pour sélectionner (40) un paquet (24), lorsqu'il passe par un premier point de contrôle (10) dans un réseau, conformément à une capacité, incluse dans une définition de structure du paquet (24), à contenir une information additionnelle incorporée dans le paquet (24) ;
un modificateur de paquet pour incorporer (42) dans ledit paquet sélectionné (24), conformément à sa définition de structure, une information prédéterminée pour mesurer au moins un paramètre opérationnel de réseau;
un transmetteur de paquet pour transmettre (44) ledit paquet (24) vers sa destination conformément à l'information d'adressage contenue dans le paquet (24);
un sélecteur pour sélectionner (46) ledit paquet (24), conformément à la présence de ladite information prédéterminée, lorsqu'il passe par un deuxième point de contrôle (16) dans le réseau, et observer ladite information prédéterminée;
un mesureur pour exécuter (50) une mesure dudit paramètre opérationnel de réseau conformément à l'information observée.

10. Système de mesure selon la revendication 9, dans lequel le paramètre opérationnel est l'un quelconque des paramètres suivants: retard unidirectionnel de bout en bout, retard aller et retour, retard accumulé, perte de paquet en transit entre deux points, et progression de paquet à travers le réseau.
